# EUROPÄISCHE PATENTANMELDUNG

(11) **EP 1 785 319 A1**
(43) Veröffentlichungstag der Anmeldung: **16.05.2007**
(21) Anmeldenummer: 06022368.2
(22) Anmeldetag: 26.10.2006
(51) Int. Cl.: B60R 21/34

(54) **Scharnier für eine anhebbare Fronthaube an einem Fahrzeug**

(30) Priorität: 09.11.2005 DE 102005053307
(71) Anmelder: IAV GmbH Ingenieurgesellschaft Auto und Verkehr, 10587 Berlin (DE)
(72) Erfinder: Krause, Mathias, 13129 Berlin (DE)
(74) Vertreter: Buss, Fritz Gerd

(57) **Zusammenfassung**

Die Erfindung betrifft ein Scharnier für eine anhebbare Fronthaube an einem Fahrzeug.

Der Erfindung liegt die Aufgabe zugrunde, ein Scharnier für eine anhebbare Fronthaube an einem Fahrzeug zu schaffen, das sich durch eine geringe Teileanzahl sowie durch einen gering benötigten Bauraum auszeichnet und das ein schnelles Verlagern der Fronthaube bei einem Aufprall zum Schutz des Aufprallbeteiligten und nach einem Aufprall einen gezielten Energieabbau ermöglicht.

Durch die Anordnung eines durch einen Energiespender verlagerbaren Hebelarmes zwischen einem an der Fahrzeugkarosserie angeordneten unteren Scharnierteil und einem mit der Fronthaube verbundenen oberen Scharnierteil kann bei einem geringen Platzbedarf und einem geringen Teileaufwand die Fronthaube bei einer Kollision mit einem Aufprallbeteiligten aus einer Normalposition in eine angehobene Schutzposition verlagert werden. Der Hebelarm ist in einem im unteren Scharnierteil angeordneten Langloch gelagert und in der verriegelten Ausgangsposition über einen ansteuerbaren Verriegelungsbolzen einer Verriegelungseinheit und einer im Hebelarm angeordneten ersten Bohrung mit dem an der Fahrzeugkarosserie angeordneten unteren Scharnierteil verbunden.

## Beschreibung

Die Erfindung betrifft ein Scharnier für eine anhebbare Fronthaube an einem Fahrzeug mit den im Oberbegriff des Patentanspruches 1 genannten Merkmalen.

Für einen aktiven Fußgängerschutz wird für Kraftfahrzeuge eine aufpralldämmende Fronthaube gefordert, die im Fall einer Kollision mit einem Fußgänger oder einem Radfahrer das Verletzungsrisiko für diesen mindert. Dabei wird bei einer Kollision des Fahrzeuges mit einem Fußgänger oder einem Radfahrer die Fronthaube des Kraftfahrzeuges aus einer Ausgangsposition in eine angehobene Position verbracht, um somit den Abstand der Fronthaube zu den starren Motorteilen zu vergrößern. Durch die angehobene Fronthaube entsteht ein größerer Deformationsweg zur Absorption der Aufprallenergie, wodurch das Verletzungsrisiko des Aufprallbeteiligten verringert wird.

Derartige anhebbare Fronthauben für einen aktiven Fußgängerschutz sind beispielsweise aus der DE 197 12 961 A1 bekannt. Dabei ist die Fronthaube über eine Scharniereinrichtung im Bereich der Windschutzscheibe des Fahrzeuges an der Fahrzeugkarosserie angeschlagen. Die Scharniereinrichtung besteht aus einem Scharnierträger, der schwenkbar an der Karosserie des Fahrzeuges angeordnet ist. Der Scharnierträger steht in Wirkverbindung mit einer energiespeichernden Einrichtung, beispielsweise einer vorgespannten Schraubenfeder, die bei einer Kollision des Fahrzeuges mit einem Fußgänger ein Verschwenken des Scharnierträgers bewirkt.

Aus der DE 101 16 716 A1 ist eine Scharniereinrichtung für eine im Kollisionsfall anhebbare Fronthaube eines Kraftfahrzeuges vorbekannt, wobei die Scharniereinrichtung aus einem Scharnierträger und zwischen diesem und der Fronthaube gelenkig angeordneten Scharniergliedern zum Anheben der Fronthaube sowie einem Energiespeicher und einer mit diesem zusammenwirkenden Verriegelungseinrichtung besteht. Der Energiespeicher mit einem dazugehörigen Stellglied ist Bestandteil eines Scharniergliedes. Der Energiespeicher ist an der Fronthaube und ein Scharnierhebel am Scharnierträger abgestützt und beide an einem fronthaubenseitigen Anlenkpunkt des Scharnierhebels gelenkig miteinander verbunden und dieser Anlenkpunkt ist in einer Langlochführung verschiebbar angeordnet.

Nachteilig bei dem bekannten Stand der Technik ist, dass die Scharniere zum Anheben einer Fronthaube bei einer Kollision mit einem Aufprallbeteiligten sehr teileaufwendig sind und einen großen Bauraum benötigen. Der Energieabbau der Aufprallenergie erfolgt durch den Energiespeicher. Das hat zur Folge, dass der Energiespeicher, wie zum Beispiel eine Zugfeder, sehr groß ausgelegt und dimensioniert werden, um die Energie aufnehmen zu können. Der groß ausgelegte Energiespeicher bedingt gleichzeitig eine Vergrößerung der Auslegung des Scharniers.

Der Erfindung liegt die Aufgabe zugrunde, ein Scharnier für eine anhebbare Fronthaube an einem Fahrzeug zu schaffen, das sich durch eine geringe Teileanzahl sowie durch einen gering benötigten Bauraum auszeichnet und das ein schnelles Verlagern der Fronthaube bei einem Aufprall zum Schutz des Aufprallbeteiligten und nach einem Aufprall einen gezielten Energieabbau ermöglicht.

Diese Aufgabe wird entsprechend der gattungsgemäßen Vorrichtung erfindungsgemäß durch die kennzeichnenden Merkmale des Patentanspruches 1 gelöst.

Durch die Anordnung eines durch einen Energiespender verlagerbaren Hebelarmes zwischen einem an der Fahrzeugkarosserie angeordneten unteren Scharnierteils und einem mit der Fronthaube verbundenen oberen Scharnierteil kann bei einem geringen Platzbedarf und einem geringen Teileaufwand die Fronthaube bei einer Kollision mit einem Aufprallbeteiligten aus einer Normalposition in eine angehobene Schutzposition verlagert werden. Der Hebelarm ist in einem im unteren Scharnierteil angeordneten Langloch gelagert und in der verriegelten Ausgangsposition über einen ansteuerbaren Verriegelungsbolzen einer Verriegelungseinheit und einer im Hebelarm angeordneten ersten Bohrung mit dem an der Fahrzeugkarosserie angeordneten unteren Scharnierteil verbunden. Im Hebelarm ist eine zweite Bohrung angeordnet, in die nach Lösen des Verriegelungsbolzens bei einer Kollision und nach Verlagern des Hebelarms durch die frei gewordene Kraft aus dem Energiespeicher der Verriegelungsbolzen einrastet und somit den Hebelarm mit dem unteren Scharnierteil verbindet. Nach Lösen des Verriegelungsbolzens wird der Hebelarm im Langloch verschoben, wobei gleichzeitig ein Schlossbügel des Frontklappenschlosses, mit dem die Fronthaube in deren vorderen Bereich verriegelt ist, in die zweite Verriegelungsstufe des Schlosses gebracht wird. Dadurch bildet der Schlossbügel im Schloss einen Drehpunkt, um den sich die Haube während der Anhebung drehen kann. Der über den Verbindungsbolzen im Langloch verschobene Hebelarm und die an dem oberen Scharnierteil befestigte Fronthaube stellen sich auf, geführt durch den Drehpunkt im Frontklappenschloss.

Der Vorteil der erfindungsgemäßen Lösung besteht darin, dass durch die Anordnung eines durch einen Energiespeicher verlagerbaren Hebelarms zwischen den Scharnierteilen der Bauaufwand für ein Scharnier für eine anhebbare Fronthaube verringert wird. Ein weiterer Vorteil besteht darin, dass durch Lösen der Verriegelung in der angehobenen Ausfahrposition der Hebelarm in seine verriegelte Ausgangsposition zurückgestellt werden kann.

Der Verriegelungsbolzen ist als Sollbruchstelle ausgelegt oder mit einer entsprechenden Sollbruchstelle versehen. Bei einem Aufprall rastet der Verriegelungsbolzen in die im Hebelarm angeordnete zweite Bohrung und wird bei einer entsprechend großen Aufprallenergie abgeschert. Durch die zusätzliche Verriegelung des Hebelarmes vor dem Aufprall und dem Abscheren des Verriegelungsbolzens während des Aufpralls wird in Verbindung mit dem Spannen des Energiespeichers ein gezielter Energieabbau der Aufprallenergie erreicht. Durch die Verriegelung des Hebelarms bei einem Aufprall in der angehobenen Stellung wird erreicht, dass bei einem Aufprall die Fronthaube durch die Abrollbewegung des Aufprallenden auf der Fronthaube nicht sofort wieder heruntergedrückt wird und somit den durch die Anhebung erzeugten Deformationsweg vor dem Aufschlagen des Kopfes auf die Fronthaube zunichte macht. Durch das Anheben der Fronthaube in Verbindung mit dessen Verriegelung durch einen Scherbolzen wird die Aufprallenergie gezielt derart abgebaut, dass zwischen der Fronthaube und der Fahrzeugkarosserie auch nach dem Aufprall in den meisten Fällen noch ein notwendig vorhandener Zwischenraum besteht.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine schematische Darstellung der erfindungsgemäßen Lösung in Vorderansicht bei einem geschlossenen Scharnier und in verriegelter Ausgangsposition,
- Fig. 2:: eine Rückansicht gemäß Figur 1,
- Fig. 3:: eine Vorderansicht der erfindungsgemäßen Lösung bei einem geöffneten Scharnier und in verriegelter Ausgangsposition,
- Fig. 4:: eine Rückansicht gemäß Figur 3,
- Fig. 5:: eine Vorderansicht der erfindungsgemäßen Lösung in angehobener Ausfahrposition,
- Fig. 6:: eine Rückansicht gemäß Figur 5 und
- Fig. 7:: die Einzelheit A-A gemäß Figur 2.

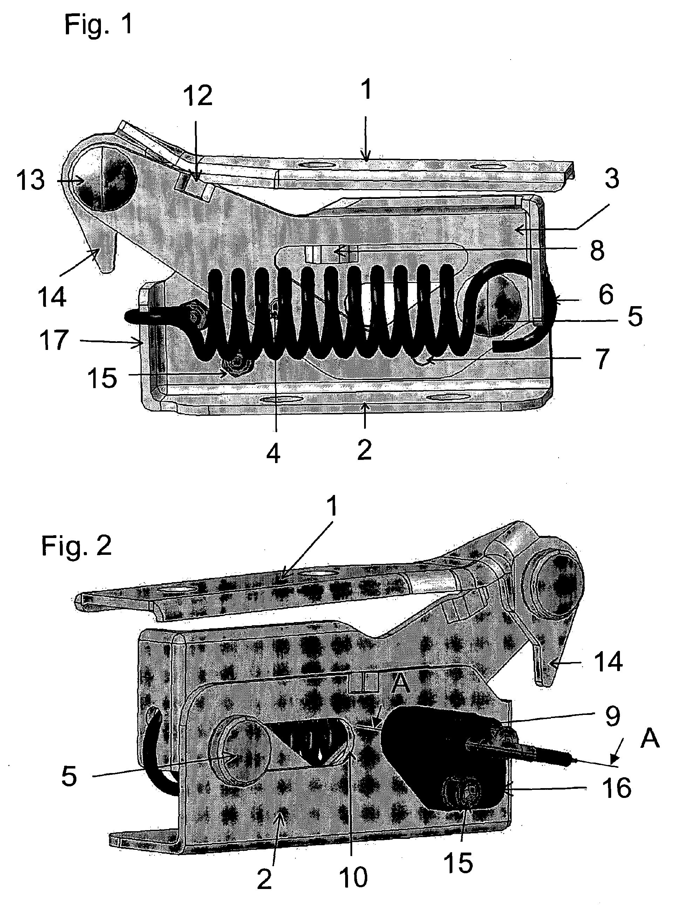

Das in Figur 1 dargestellte Scharnier zum Öffnen und zum Anheben der Fronthaube eines Fahrzeuges bei einer Kollision eines Aufprallbeteiligten mit dem Fahrzeug ist einerseits hinten an der Fronthaube in Richtung Frontscheibe und andererseits an der Fahrzeugkarosserie, vorzugsweise an dessen oberen Längsträger angeschlagen. Dabei ist ein oberes Scharnierteil 1 mit der nicht dargestellten Fronthaube und ein unteres Scharnierteil 2 mit dem Längsträger der Fahrzeugkarosserie verbunden.

Ein Hebelarm 3 ist einerseits über einen Bolzen 13, einen Niet oder dergleichen mit dem schwenkbar angeordneten oberen Scharnierteil 1 verbunden. Andererseits ist der Hebelarm 3 über einen Verbindungsbolzen 5 oder ebenfalls über einen Niet oder dergleichen schwenkbar mit dem unteren Scharnierteil 2 verbunden. Dabei ist der Hebelarm 3 über den Verbindungsbolzen 5 in einem im unteren Scharnierteil 2 angeordneten Langloch 10 gelagert. Bei dem in der Figur 1 und 2 dargestellten Scharnier ist die Fronthaube geschlossen und das Scharnier befindet sich in einer verriegelten Ausgangsposition, bei der die Fronthaube nicht angehoben ist. Der Hebelarm 3 ist mit einer Aussparung 11 versehen, in die ein am unteren Scharnierteil 2 angeordneter Anschlag 8 eingreift. In der Normalposition liegt der Hebelarm 3 auf dem Anschlag 8 des unteren Scharnierteils 2 auf.

In der normalen Ausgangsposition erfolgt die Verriegelung über eine in Figur 2 dargestellte Verriegelungseinheit 16, die an dem unteren Scharnierteil 2 über eine Befestigung 15 fest an diese angeordnet ist. Dabei greift ein ansteuerbarer Verriegelungsbolzen 4 der Verriegelungseinheit 16 in eine in dem Hebelarm 3 befindliche erste Bohrung 18 ein und verbindet somit den Hebelarm 3 mit dem unteren Scharnierteil 2. In dem normalen Betriebszustand steht der Hebelarm 3 mit einem entspannbaren Energiespeicher in Wirkverbindung. Der Energiespeicher ist beispielsweise eine vorgespannte Zugfeder 6, die einerseits am unteren Scharnierteil 2, zum Beispiel an dessen Seitenwand 17, oder an der Fahrzeugkarosserie und andererseits am Hebelarm 3 oder an dem Verbindungsbolzen 5 befestigt ist.

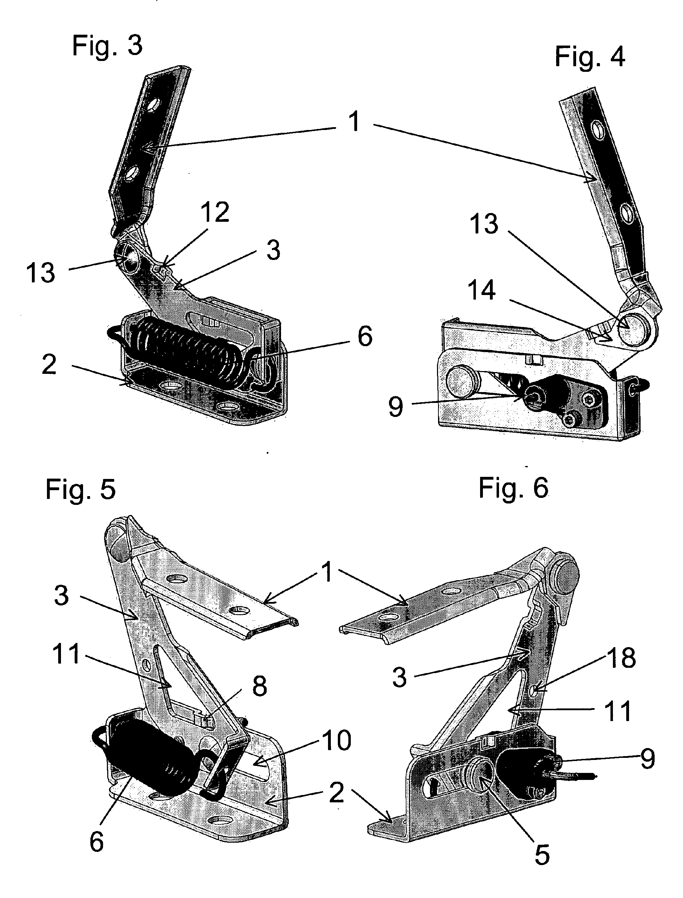

In Figur 3 und 4 ist ein Scharnier dargestellt, bei dem die Fronthaube geöffnet ist. Im vorderen Bereich der Fronthaube ist in bekannter Weise an der Fronthaube ein Schlossbügel angeordnet, der mit dem eigentlichen Frontklappenschloss ver- und entriegelt werden kann. Nach Öffnen eines nicht dargestellten Frontklappenschlosses wird zum Öffnen der Fronthaube das obere Scharnierteil 1 mit der Fronthaube um den Bolzen 13 verschwenkt. Das Öffnen der Fronthaube wird begrenzt durch einen an dem oberen Scharnierteil 1 angeordneten Haken 14, der bei vollständig aufgestellter Fronthaube an einem am Hebelarm 3 angeordneten Anschlag 12 anliegt. Der Hebelarm 3 ist auch während des Öffnens der Fronthaube in der Ausgangsposition verriegelt.

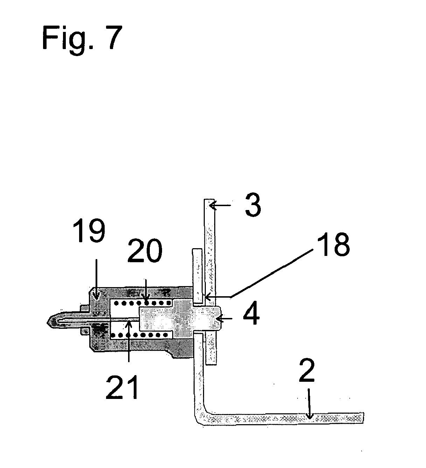

In Figur 5 und 6 ist jeweils ein Scharnier in einer nach einer Kollision angehobenen Ausfahrposition der Fronthaube dargestellt. Bei einem Aufprall eines Aufprallbeteiligten auf die Fronthaube des Fahrzeuges wird über einen Sensor elektrisch oder mechanisch ein Stellglied 9 der Verriegelungseinheit 16 angesteuert. Die als Einzelheit in Figur 7 dargestellte Verriegelungseinheit 16 besteht aus einem Gehäuse, in dem verschiebbar der über eine Druckfeder 20 vorbelastete Verriegelungsbolzen 4 gelagert ist. Zur Auslösung eines entsprechenden Impulses zur Lösung der Verbindung zwischen dem unteren Scharnierteil 2 und dem Hebelarm 3 ist der Verbindungsbolzen 4 mit einem Bowdenzug 21 verbunden. Bei einer Kollision wird über den Bowdenzug 21 der Verriegelungsbolzen 4 entgegen der Federkraft der Druckfeder 20 soweit verschoben, dass der Verriegelungsbolzen 4 keinen Kontakt mehr mit der im Hebelarm 3 angeordneten Bohrung 18 hat. Die vorgespannte Zugfeder 6 zieht den in dem Langloch 10 über den Verbindungsbolzen 5 gelagerten Hebelarm 3 nach vorn. Gleichzeitig wird der Schlossbügel des Frontklappenschlosses in die zweite Verriegelungsstufe des Schlosses gebracht. Dadurch bildet der Schlossbügel im Schloss einen Drehpunkt, um den sich die Fronthaube während der Anhebung drehen kann. Der über den Verbindungsbolzen 5 im Langloch 10 verschobene Hebelarm 3 und die an dem oberen Scharnierteil 1 befestigte Fronthaube stellen sich auf, geführt durch den Drehpunkt im Frontklappenschloss.

Zur Verringerung der Reibung zwischen dem Verriegelungsbolzen 4 und der jeweiligen Bohrung 7 und 18 und des Verbindungsbolzens 5 und dem Langloch 10 ist der Verriegelungsbolzen 4 und der Verbindungsbolzen 5 mit einer beschichteten Führungsbuchse, beispielsweise einer mit Teflon beschichteten Buchse, versehen.

Nach Erreichen der Endstellung, wobei sich der Hebelarm 3 in der angehobenen Ausfahrposition befindet, rastet der federbelastete Verriegelungsbolzen 4 in eine im Hebelarm 3 angeordnete zweite Bohrung 7, so dass der Hebelarm 3 mit dem unteren Scharnierteil 2 ebenfalls in dieser Stellung arretiert wird. Gleichzeitig liegt der in die Aussparung 11 des Hebelarms 3 eingreifende Anschlag 8 des unteren Scharnierteils 2 an dem unteren Bereich des Hebelarms 3 an.

Der Verriegelungsbolzen 4 ist mit einer Sollbruchstelle versehen oder ist als Sollbruchbolzen ausgelegt, so dass dieser bei einem entsprechend harten Aufprall eines Aufprallbeteiligten auf die Fronthaube abgeschert wird. Nach dem Bruch des Verriegelungsbolzens 4 wird der Hebelarm 3 wieder nach unten gedrückt, wobei die Restenergie des Aufprallbeteiligten durch die Kraft zum Spannen der Zugfeder 6 abgebaut und damit weitestgehend ein Durchschlagen des Aufprallbeteiligten auf die harten Karosseriestrukturen des Fahrzeuges vermieden wird. Außerdem wird durch den Bruch des Verriegelungsbolzens 4 der größte Energieanteil bereits am Anfang des Zusammenstoßes absorbiert, so dass ein gezielter Abbau der Aufprallenergie bei einer weitestgehenden Vermeidung eines Durchschlagens erreicht wird.

Die Rückstellung des aktiv angehobenen Scharnierteils 1 kann bei geschlossener Fronthaube durch Krafteinleitung auf die Fronthaube von oben oder bei geöffneter Fronthaube durch Zurückziehen des Hebelarms 3 erfolgen. Bei einem intakten, nicht abgescherten Verriegelungsbolzen 4 rastet diese bei der Zurückstellung des Hebelarms 3 wieder in die Bohrung 18 des Hebelarms 3 ein und arretiert somit den Hebelarm 3 wieder mit dem unteren Scharnierteil 2. Bei einem abgescherten Verrieglungsbolzen 4 muss das Fahrzeug in eine Werkstatt zur Erneuerung des abgescherten Verriegelungsbolzens 4 und zur Aktivierung des Systems.

### Aufstellung der verwendeten Bezugszeichen

- 1: oberes Scharnierteil
- 2: unteres Scharnierteil
- 3: Hebelarm
- 4: Verriegelungsbolzen
- 5: Verbindungsbolzen
- 6: Zugfeder
- 7: Bohrung
- 8: Anschlag
- 9: Stellglied
- 10: Langloch
- 11: Aussparung
- 12: Anschlag
- 13: Bolzen
- 14: Haken
- 15: Befestigung
- 16: Verriegelungseinheit
- 17: Seitenwand
- 18: Bohrung
- 19: Gehäuse
- 20: Druckfeder
- 21: Bowdenzug

## Patentansprüche

1. Scharnier für eine anhebbare Fronthaube an einem Fahrzeug, bei dem das Scharnier zwischen der Fahrzeugkarosserie und der Fronthaube angeordnet ist und über einen Hebelarm mit einem entspannbaren Energiespeicher in Wirkverbindung steht, um ein Scharnierteil mit der Fronthaube bei einer Kollision mit einem Aufprallbeteiligten aus einer verriegelten Ausgangsposition in eine angehobene Ausfahrposition zu verlagern,
**dadurch gekennzeichnet, dass**
der mit dem entspannbaren Energiespeicher in Wirkverbindung stehende Hebelarm (3) über einen Verbindungsbolzen (5) in einem im unteren Scharnierteil (2) angeordneten Langloch (10) gelagert und in der verriegelten Ausgangsposition über einen ansteuerbaren Verriegelungsbolzen (4) einer Verriegelungseinheit (16) und einer im Hebelarm (3) angeordneten ersten Bohrung (18) mit dem an der Fahrzeugkarosserie angeordneten unteren Scharnierteil (2) verbunden ist und in der angehobenen Ausfahrposition der Hebelarm (3) über den Verriegelungsbolzen (4) und einer im Hebelarm (3) angeordneten zweiten Bohrung (7) mit dem unteren Scharnierteil (2) verbunden ist.

2. Scharnier nach Anspruch 1,
**dadurch gekennzeichnet, dass**
in der verriegelten Ausgangsposition der Hebelarm (3) direkt oder über den Verbindungsbolzen (5) mit dem entspannbaren Energiespeicher, beispielsweise einer vorgespannten Zugfeder (6), in Wirkverbindung steht.

3. Scharnier nach Anspruch 1 und 2,
**dadurch gekennzeichnet, dass**
eine Seite des entspannbaren Energiespeichers fest mit dem unteren Scharnierteil (2) oder mit der Fahrzeugkarosserie verbunden ist.

4. Scharnier nach Anspruch 1 bis 3,
**dadurch gekennzeichnet, dass**
der Verriegelungsbolzen (4) zum Entriegeln des Hebelarms (3) mit einem elektrisch oder mechanisch ansteuerbaren Stellglied (9) verbunden ist.

5. Scharnier nach Anspruch 1 bis 4,
**dadurch gekennzeichnet, dass**
der Hebelarm (3) mit einer Aussparung (11) versehen ist, in die ein am unteren Scharnierteil (2) angeordneter Anschlag (8) eingreift.

6. Scharnier nach Anspruch 1 bis 5,
**dadurch gekennzeichnet, dass**
der Hebelarm (3) über einen Bolzen (13) mit dem schwenkbar angeordneten oberen Scharnierteil (1) verbunden ist.

7. Scharnier nach Anspruch 1 bis 6,
**dadurch gekennzeichnet, dass**
an dem oberen Scharnierteil (1) ein Haken (14) und an dem Hebelarm (3) ein Anschlag (12) zur Begrenzung der Schwenkbewegung des oberen Scharnierteils (1) angeordnet ist.

8. Scharnier nach Anspruch 1 bis 7,
**dadurch gekennzeichnet, dass**
das obere Scharnierteil (1) mit einer Fronthaube verbunden ist.

9. Scharnier nach Anspruch 1 bis 8,
**dadurch gekennzeichnet, dass**
das Stellglied (9) der am unteren Scharnierteil (2) angeordneten Verriegelungseinheit (16) aus einem in einem Gehäuse (19) angeordneten Verriegelungsbolzen (4) besteht, der mit einem Bowdenzug (21) verbunden ist und mit einer Druckfeder (20) in Wirkverbindung steht.

10. Scharnier nach Anspruch 1 bis 9,
**dadurch gekennzeichnet, dass**
der Verriegelungsbolzen (4) mit einer Sollbruchstelle versehen ist oder als Sollbruchbolzen ausgebildet ist.
